# EUROPÄISCHE PATENTSCHRIFT

(11) **EP 2 073 581 B1**
(45) Veröffentlichungstag und Bekanntmachung des Hinweises auf die Patenterteilung: **16.08.2017**
(21) Anmeldenummer: 08021911.6
(22) Anmeldetag: 17.12.2008
(51) Int. Cl.: H04W 4/18, H04M 1/725, H04M 3/533, H04W 4/14, H04W 88/18

(54) **Übertragung von aus Sprachnachrichten erzeugten Textnachrichten in Telekommunikationsnetzen**
Transmission of text messages generated from voice messages in telecommunication networks
Transmission de messages textes dérivées de messages vocaux dans des réseaux de télécommunication

(30) Priorität: 17.12.2007 DE 102007061156
(43) Veröffentlichungstag der Anmeldung: 24.06.2009
(73) Patentinhaber: Vodafone Holding GmbH, 40213 Düsseldorf (DE)
(72) Erfinder: Wortmann, Hubertus, 40764 Langenfeld (DE)
(74) Vertreter: Ring & Weisbrodt

(56) Entgegenhaltungen:
- EP-A- 0 869 690
- EP-A- 1 248 486
- WO-A-2005/031995
- WO-A-2009/014935
- US-A1- 2003 157 968
- US-B1- 6 604 078

## Beschreibung

Die vorliegende Erfindung betrifft ein Verfahren zur Übertragung von Nachrichten in Telekommunikationsnetzen, insbesondere Mobilfunknetzen gemäß einem GSM-, GPRS- und/oder UMTS-Funknetzstandard, wobei ein Nachrichtensender eine Sprachnachricht erzeugt, aus der Sprachnachricht eine Textnachricht, erzeugt wird und die Textnachricht mittels eines Nachrichtendienstes des Telekommunikationsnetzes an wenigstens einen Nachrichtenempfänger gesendet wird.

Ferner betrifft die vorliegende Erfindung einen Netzknoten in einem Telekommunikationsnetz und ein Endgerät zur Nutzung in Telekommunikationsnetzen, welche ausgebildet und/oder eingerichtet sind, ein erfindungsgemäßes Verfahren zumindest teilweise auszuführen.

Im Stand der Technik sind verschiedene Verfahren und Systeme zur Nachrichtenübertragung in Telekommunikationsnetzen bekannt, bei denen aus einer Sprachnachricht eine Textnachricht erzeugt und über das Telekommunikationsnetz übertragen wird, beispielsweise aus der WO 2004/095422 A2, der WO 2004/095821 A2 oder der EP 1 248 486 A2.

Die US 2003/0157968 A1 offenbart ein Verfahren zum Erstellen von Textnachrichten mittels eines mobilen Endgerätes unter Nutzung einer Spracherkennung, bei welchem ein Nutzer des mobilen Endgerätes eine Textnachricht diktiert, welche mittels der über einen externen Server bereitgestellten Spracherkennung in einen Text umgewandelt wird. Der auf diese Weise umgewandelte Text wird auf einem Server abgespeichert und kann anschließend per E-Mail versendet werden.

Aus der WO 2005/031995 A1 ist ein Verfahren zum Erstellen von Textnachrichten mittels eines elektronischen Endgerätes bekannt, bei dem Spracheingaben eines Nutzers, welche von einer Spracherkennung ausgewertet werden, einer nutzerseitig vorgehaltenen Textvorlage zugeordnet werden. Ein Versenden der aus den Textvorlagen zusammengestellten Textnachricht findet anschließend statt.

Die US 6,604,078 B1 offenbart eine Vorrichtung zum Editieren von aufgezeichneten Sprachdaten, wobei die aufgezeichneten Sprachdaten in Sprach-und Textinformationen konvertiert und zusammen mit Informationen hinsichtlich der Verknüpfung von Sprach- und Textinformationen abgespeichert werden. Aufgrund der Verknüpfung von Sprach- und Textinformationen kann jedem Teil der Textinformation ein entsprechender Teil der Sprachinformation zugeordnet werden.

Nachteilig bei den bisher bekannten Verfahren und Systemen sind die insbesondere im Zusammenhang mit der Spracherkennung nach wie vor gegebenen Beschränkungen hinsichtlich der Qualität der Übersetzung von Sprache in Text, insbesondere im Bereich mobiler Anwendungen in Mobilfunknetzen, bei denen Umgebungsgeräusche, Verbindungsqualität und/oder dergleichen die Qualität der Spracherkennung stark beeinflussen. Oftmals sind hier zur Erzielung vernünftig nutzbarer beziehungsweise verwertbarer Ergebnisse die Spracherkennung unterstützende Dienste mit
entsprechendem Personal einzusetzen, wodurch die entsprechende Nachrichtenübertragung aufwändig und kostenintensiv wird, sowohl seitens der Nutzer als auch seitens der Anbieter einer entsprechenden Nachrichtenübertragung.

Der vorliegenden Erfindung liegt in Anbetracht dieses Standes der Technik die Aufgabe zugrunde, die Übertragung von Nachrichten in Telekommunikationsnetzen, wobei ein Nachrichtensender eine Sprachnachricht erzeugt, aus der Sprachnachricht eine Textnachricht erzeugt wird und die Textnachricht mittels eines Nachrichtendienstes des Telekommunikationsnetzes an wenigstens einen Nachrichtenempfänger gesendet wird, zu verbessern, insbesondere hinsichtlich der Erzielung vernünftig nutzbarer beziehungsweise verwertbarer Textnachrichten.

Zur technischen Lösung wird mit der vorliegenden Erfindung ein Verfahren mit den Merkmalen des Anspruchs 1 vorgeschlagen.

Vorteilhafterweise ist vorgesehen, dass die aus der Sprachnachricht erzeugte Textnachricht vor der Sendung an den wenigstens einen Nachrichtenempfänger von dem Nachrichtensender überprüft und bedarfsweise editiert wird.

Durch die erfindungsgemäße Verfahrensführung ist eine Verbesserung hinsichtlich der Erzielung vernünftig nutzbarer beziehungsweise verwertbarer Textnachrichten gegeben, insbesondere da vor der Sendung eine Überprüfung und bedarfsweise ein Editieren der aus einer Sprachnachricht erzeugten Textnachricht durch Nachrichtensender selbst erfolgt und dabei ansonsten zur Erzielung vernünftig nutzbarer beziehungsweise verwertbarer Ergebnisse notwendige, die Spracherkennung unterstützende Dienste mit entsprechendem Personal entfallen können.

Eine vorteilhafte Ausgestaltung der Erfindung sieht vor, dass die Überprüfung und/oder das Editieren der aus der Sprachnachricht erzeugten Textnachricht unter Nutzung einer seitens eines in dem Telekommunikationsnetz betreibbaren
Endgerätes des Nachrichtensenders ausgeführten Editoranwendung und/oder unter Nutzung eines Sprachdialogsystems (IVR: Interactive Voice Response) erfolgt. Ein entsprechendes Sprachdialogsystem, auch Voice Portal genannt, ermöglicht eine Überprüfung und/oder das Editieren mittels einfacher Sprachnavigation, wobei Technologien und/oder Systeme der Spracherkennung, vorteilhafterweise akustische und/oder optische Spracherkennung, der Sprachsynthese (Text-to-Speech) und/oder der Sprecher-Authentifizierung, insbesondere hinsichtlich einer Nutzung der Stimme als Passwort genutzt werden. Vorteilhafterweise können dabei Eingaben mitunter auch durch Doppeltonmehrfrequenzeingaben (Doppeltonmehrfrequenz: DTMF (Dual Tone Multiple Frequency) erfolgen.

In einer weiteren vorteilhaften Ausgestaltung der Erfindung erfolgt die Überprüfung und/oder das Editieren der aus der Sprachnachricht erzeugten Textnachricht durch akustische und/oder optische Eingaben beziehungsweise Ausgaben seitens wenigstens einer Eingabeeinrichtung beziehungsweise Ausgabeeinrichtung eines in dem Telekommunikationsnetz betreibbaren Endgerätes des Nachrichtensenders. Dabei erfolgt eine Eingabe vorzugsweise durch Spracheingabe und/oder durch Tastenbetätigung seitens eines in dem Telekommunikationsnetz betreibbaren Endgerätes des Nachrichtensenders.

Eine weitere vorteilhafte Ausgestaltung der Erfindung sieht vor, dass die Textnachricht seitens einer Einrichtung des Telekommunikationsnetzes
und/oder seitens einer mit dem Telekommunikationsnetz verbindbaren Einrichtung aus der Sprachnachricht erzeugt wird. Vorteilhafterweise wird die erzeugte Textnachricht zur Überprüfung und/oder zum Editieren an den Nachrichtensender gesendet, vorzugsweise mittels und/oder unter Nutzung eines Nachrichtendienstes des Telekommunikationsnetzes. Als Nachrichtendienst des Telekommunikationsnetzes kommen vorzugsweise ein Kurzmitteilungsdienst (SMS: Short Message Service) oder ein Multimediamitteilungsdienst (MMS: Multimedia Messaging Service) zum Einsatz, vorteilhafterweise in Abhängigkeit von dem Umfang des Textes und/oder Vorgaben und/oder Nutzungsvorlieben des Nachrichtensenders.

In einer weiteren vorteilhaften Ausgestaltung der Erfindung erfolgt die Überprüfung und/oder das Editieren der aus der Sprachnachricht erzeugten Textnachricht über das Telekommunikationsnetz, wobei der Nachrichtensender über das Telekommunikationsnetz mit der die Textnachricht aus der Sprachnachricht erzeugenden Einrichtung des Telekommunikationsnetzes verbunden wird und die Textnachricht von dem Nachrichtensender über das Telekommunikationsnetz überprüft und bedarfsweise editiert wird. Zur Überprüfung und/oder zum Editieren der der aus der Sprachnachricht erzeugten Textnachricht seitens des Telekommunikationsnetzes oder seitens des Endgerätes des Nachrichtensenders wird vorteilhafterweise eine Sprachnachricht erzeugt, welche seitens des Endgerätes des Nachrichtensenders wiedergegeben wird.

Erfindungsgemäß wird aus der Sprachnachricht eine Textnachricht erzeugt, wenn der Nachrichtenempfänger im Telekommunikationsnetz nicht erreichbar ist und/oder das in dem Telekommunikationsnetz betreibbare Endgerät des Nachrichtenempfängers sich in einem Funktionszustand befindet, in welchem eine akustische Wiedergabe von Signalen, vorzugsweise Sprachnachrichten, deaktiviert ist.

Erfindungsgemäß kommen als Nachrichtendienst des Telekommunikationsnetzes ein Kurzmitteilungsdienst (SMS) oder ein Multimediamitteilungsdienst (MMS) zum Einsatz. Vorteilhafterweise ist eine erfindungsgemäße Textnachricht eine Nachricht in einem Format des
Kurzmitteilungsdienstes (SMS) oder des Multimediamitteilungsdienstes (MMS). In einer weiteren vorteilhaften Ausgestaltung der Erfindung ist die Sprachnachricht eine Nachricht in einem Format des Multimediamitteilungsdienstes (MMS).

Zur technischen Lösung der eingangs genannten Aufgabe wird mit der vorliegenden Erfindung ferner ein Netzknoten in einem Telekommunikationsnetz insbesondere einem Mobilfunknetz gemäß einem GSM-, GPRS- und/oder UMTS-Funknetzstandard, vorgeschlagen, welcher ausgebildet und/oder eingerichtet ist ein erfindungsgemäßes Verfahren zumindest teilweise auszuführen.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Prinzipdarstellung eine Übersicht von möglichen Anwendungsfällen einer erfindungsgemäßen Nachrichtenübertragung;
- Fig. 2: in einer schematischen Prinzipdarstellung ein Ausführungsbeispiel einer Kommunikation eines ersten Anwendungsfalls einer erfindungsgemäßen Nachrichtenübertragung (Voicemail-to-SMS);
- Fig. 3: in einer schematischen Prinzipdarstellung ein Ausführungsbeispiel einer Kommunikation eines zweiten Anwendungsfalls einer erfindungsgemäßen Nachrichtenübertragung (IVR-to-SMS) und
- Fig. 4: in einer schematischen Prinzipdarstellung ein Ausführungsbeispiel einer Kommunikation eines dritten und vierten Anwendungsfalls einer erfindungsgemäßen Nachrichtenübertragung (SMS-Dictation).

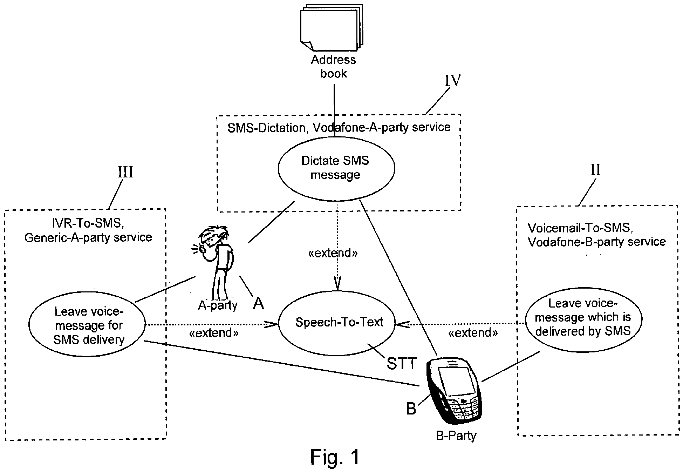

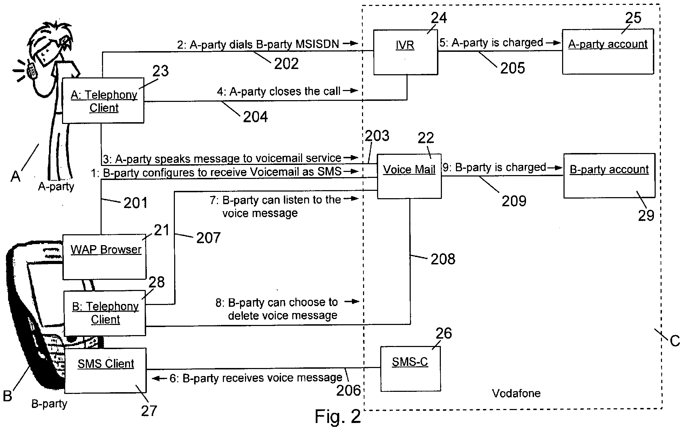

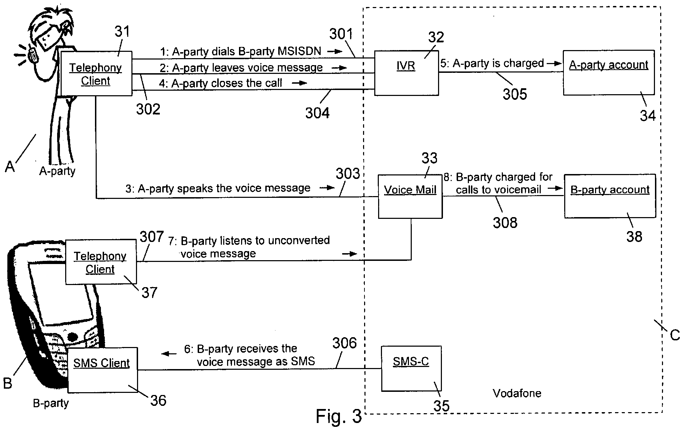

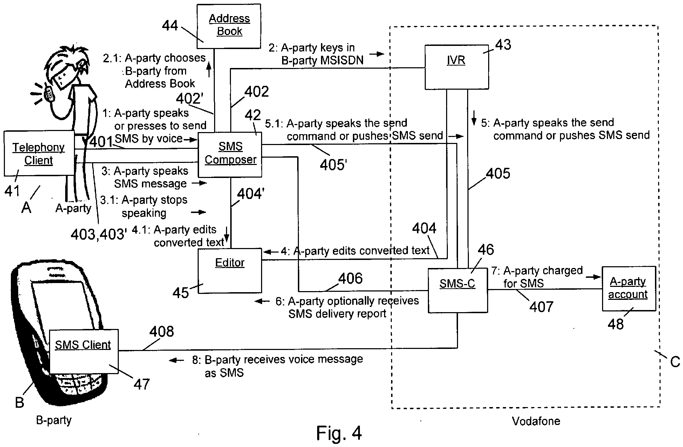

Fig. 1 zeigt die in Telekommunikationsnetzen, vorliegend einem Mobilfunknetz gemäß einem GSM-, GPRS- und/oder UMTS-Funknetzstandard, möglichen Anwendungsfälle einer erfindungsgemäßen Nachrichtenübertragung zwischen einem Nachrichtensender und einem Nachrichtenempfänger beziehungsweise deren in dem Telekommunikationsnetz betreibbaren Endgeräten A bzw. B. Für die erfindungsgemäße Nachrichtenübertragung sind dabei sowohl für Nachrichtensender als auch Nachrichtenempfänger drei verschiedene Anwendungsfälle - "Voicemail-to-SMS" (Fig. 2), "IVR-to-SMS" (Fig. 3) und "SMS-Dictation" (Fig. 4) - vorgesehen, deren Kommunikationsabläufe in Fig. 2, Fig. 3 und Fig. 4 im Detail dargestellt sind. Bei allen Anwendungsfällen erfolgt eine Umwandlung von Sprache in Text ("Speech-to-Text"), in Fig. 1 mit STT gekennzeichnet. Die in Fig. 1 mit A und B gekennzeichneten Teilnehmer beziehungsweise deren Endgeräte können dabei je nach Anwendung Nachrichtensender beziehungsweise Nachrichtenempfänger sein.

Bei dem in Fig. 2 dargestellten Anwendungsfall "Voicemail-to-SMS" hat der Teilnehmer B seitens des Mobilfunknetzes C seinen Mobilfunknetzzugang zum Empfang von Sprachnachrichten als SMS (Voicemail-to-SMS) eingerichtet. Die Einrichtung des "Voicemail-to-SMS"-Dienstes erfolgt vorliegend mit einer seitens des Endgerätes B laufenden WAP-Browser-Anwendung 21 über die über das Mobilfunknetz C eine seitens des Mobilfunknetzes C vorgesehene Sprachnachrichten-Einrichtung (Voice Mail) 22 konfigurierbar ist, in Fig. 2 mit 201 ("1: B-Party configures to receive Voicemail as SMS") gekennzeichnet.

Der Teilnehmer A richtet unter Nutzung einer Telefonanwendung (Telephony Client) 23 seitens seines Endgerätes A eine Anforderung nach einer Sprachkommunikation mit dem Teilnehmer B unter Nutzung der dem Teilnehmer B seitens des Mobilfunknetzes C zugeordneten MSISDN an das Mobilfunknetz C. Die Anforderung nach einer Sprachkommunikation mit dem Teilnehmer B ist in Fig. 2 mit 202 ("2: A-party dials B-party MSISDN") gekennzeichnet und wird vorliegend an ein Sprachdialogsystem IVR 24 des Mobilfunknetzes C weitergeleitet. Anschließend hinterlässt der Teilnehmer A seitens der Sprachnachrichten-Einrichtung (Voice Mail) 22 des Mobilfunknetzes C eine Sprachnachricht für den Teilnehmer B, in Fig. 2 mit 203 ("3: A-party speaks message to voicemail service) gekennzeichnet. Schließlich beendet der Teilnehmer A über die Telefonanwendung (Telephony Client) 23 seitens seines Endgerätes A seinen Anruf in Fig. 2 mit 204 ("4: A-party closes the call) gekennzeichnet. Die von Teilnehmer A getätigte Kommunikation wird auf dem Konto (A-party account) 25 des Teilnehmers A seitens des Mobilfunknetzes C vergebührt. Die Vergebührung ist in Fig. 2 mit 205 ("5: A-party is charged") gekennzeichnet.

Vorliegend sendet das Mobilfunknetz C dem Teilnehmer B über eine Einrichtung 26 zur Speicherung und Auslieferung von Nachrichten, vorliegend einem zur Speicherung und Auslieferung von Nachrichten des Short Message Service (SMS) zuständigen SMSC (Short Message Service Center) 26, die von dem Teilnehmer A hinterlassene Sprachnachricht (voice message) als SMS, in Fig. 2 mit 206 ("6: B-party receives voice message"). Die von dem Teilnehmer A für den Teilnehmer B hinterlassene Sprachnachricht (voice message) ist dabei vorliegend seitens des Mobilfunknetzes C in eine Textnachricht, vorliegend im SMS-Format, umgewandelt worden. Der Empfang und die Nutzung der Sprachnachricht (voice message) erfolgt seitens des Endgerätes B des Teilnehmers B unter Nutzung einer Nachrichten-Anwendung (SMS Client) 27.

Der Teilnehmer B kann unter Nutzung einer Telefonanwendung (Telephony Client) 28 seitens seines Endgerätes B für ihn seitens der Sprachnachrichten-Einrichtung (Voice Mail) 22 des Mobilfunknetzes C hinterlassene Sprachnachrichten (voice message) abhören (in Fig. 2 mit 207 ("7: B-party can listen to the voice message") gekennzeichnet) und/oder verwalten, beispielsweise löschen (in Fig. 2 mit 208 ("8: B-party can delete voice message") gekennzeichnet). Die von Teilnehmer B dabei getätigte Kommunikation wird auf dem Konto (B-party account) 29 des Teilnehmers B seitens des Mobilfunknetzes C vergebührt. Die Vergebührung ist in Fig. 2 mit 209 ("9: B-party is charged") gekennzeichnet.

Bei dem in Fig. 3 dargestellten Anwendungsfall "IVR-to-SMS" richtet der Teilnehmer A unter Nutzung einer Telefonanwendung (Telephony Client) 31 seitens seines Endgerätes A eine Anforderung nach einer Sprachkommunikation mit dem Teilnehmer B unter Nutzung der dem Teilnehmer B seitens des Mobilfunknetzes C zugeordneten MSISDN an das Mobilfunknetz C. Die Anforderung nach einer Sprachkommunikation mit dem Teilnehmer B ist in Fig. 3 mit 301 ("1: A-party dials B-party MSISDN") gekennzeichnet und wird vorliegend an ein Sprachdialogsystem IVR 32 des Mobilfunknetzes C weitergeleitet. Anschließend erhält der Teilnehmer A seitens des Sprachdialogsystem IVR 32 die Möglichkeit eine Sprachnachricht für den Teilnehmer B (in Fig. 3 mit 302 ("2: A-party leaves voice message) gekennzeichnet) zu hinterlassen. Die Sprachnachricht für den Teilnehmer B wird dabei von dem Teilnehmer A seitens einer Sprachnachrichten-Einrichtung (Voice Mail) 33 des Mobilfunknetzes C aufgesprochen und erfasst (in Fig. 3 mit 303 ("3: A-party speaks the voice message) gekennzeichnet). Schließlich beendet der Teilnehmer A über die Telefonanwendung (Telephony Client) 31 seitens seines Endgerätes A seinen Anruf, in Fig. 3 mit 304 ("4: A-party closes the call) gekennzeichnet. Die von Teilnehmer A getätigte Kommunikation wird auf dem Konto (A-party account) 34 des Teilnehmers A seitens des Mobilfunknetzes C vergebührt. Die Vergebührung ist in Fig. 3 mit 305 ("5: A-party is charged") gekennzeichnet.

Vorliegend sendet das Mobilfunknetz C dem Teilnehmer B über ein zur Speicherung und Auslieferung von Nachrichten des Short Message Service (SMS) zuständiges SMSC (Short Message Service Center) 35, die von dem Teilnehmer A hinterlassene Sprachnachricht (voice message), in Fig. 3 mit 306 ("6: B-party receives voice message as SMS"). Die von dem Teilnehmer A für den Teilnehmer B hinterlassene Sprachnachricht (voice message) ist dabei vorliegend seitens des Mobilfunknetzes C in eine Textnachricht, vorliegend im SMS-Format, umgewandelt worden. Der Empfang und die Nutzung der Sprachnachricht (voice message) erfolgt seitens des Endgerätes B des Teilnehmers B unter Nutzung einer Nachrichten-Anwendung (SMS Client) 36.

Der Teilnehmer B kann unter Nutzung einer Telefonanwendung (Telephony Client) 37 seitens seines Endgerätes B für ihn seitens der Sprachnachrichten-Einrichtung (Voice Mail) 33 des Mobilfunknetzes C hinterlassene Sprachnachrichten (voice message) abhören (in Fig. 3 mit 307 ("7: B-party can listen to unconverted voice message") gekennzeichnet). Die von Teilnehmer B dabei getätigte Kommunikation wird auf dem Konto (B-party account) 38 des Teilnehmers B seitens des Mobilfunknetzes C vergebührt. Die Vergebührung ist in Fig. 3 mit 308 ("8: B-party is charged") gekennzeichnet.

Bei dem in Fig. 4 dargestellten Anwendungsfall "SMS-Dictation" erzeugt der Teilnehmer A unter Nutzung einer Telefonanwendung (Telephony Client) 41 seitens seines Endgerätes A eine an den Teilnehmer B zu versendende Nachricht, vorliegend eine SMS. Für die Erzeugung der SMS aus einer Sprachnachricht wird eine Nachrichtenerzeugungseinrichtung (SMS Composer) 42 verwendet. Die Nutzung Nachrichtenerzeugungseinrichtung (SMS Composer) 42 erfolgt durch eine Eingabe des Teilnehmers A seitens des Endgerätes A durch Tastenbetätigung oder durch Sprache, in Fig. 4 mit 401 ("1: A-party speaks or presses to send SMS by voice") gekennzeichnet.

Die Nachrichtenerzeugungseinrichtung (SMS Composer) 42 erlaubt dem Teilnehmer A dabei entweder die als SMS zu versendende Sprachnachricht direkt seitens des Mobilfunknetzes C als Sprachnachricht zu erfassen oder aber die als SMS zu versendende Sprachnachricht zunächst seitens des Endgerätes A als Sprachnachricht zu erfassen. Bei der Erfassung der Sprachnachricht seitens des Mobilfunknetzes C erfolgt die Erzeugung der SMS als Textnachricht aus der Sprachnachricht seitens des Endgerätes A des Teilnehmers A erfolgt die Erzeugung der SMS als Textnachricht aus der Sprachnachricht entweder seitens des Endgerätes A selbst, wozu dieses eine entsprechende Umsetzeinrichtung (STT) aufweist, oder aber seitens des Mobilfunknetzes C, wobei das Endgerät A die seitens des Endgerätes A erfasste Sprachnachricht an das Mobilfunknetz C sendet und seitens des Mobilfunknetzes C oder einer dazu vorgesehenen, mit dem Mobilfunknetz C verbindbaren Einrichtung (STT) die Erzeugung der SMS als Textnachricht aus der Sprachnachricht erfolgt.

Das Sprachdialogsystem IVR 43 des Mobilfunknetzes C fordert bei dem Teilnehmer A anschließend die MSISDN des Empfängers der zu versendenden SMS an, vorliegend also die MSISDN des Teilnehmers B. Die MSISDN des Teilnehmers B kann dann entweder von dem Teilnehmer A durch Sprache oder durch Tastenbetätigung eingegeben und über das Mobilfunknetz C an das Sprachdialogsystem IVR 43 übermittelt werden (in Fig. 4 mit 402 ("2: A-party keys in B-party-MSISDN") gekennzeichnet), oder aber aus einer Adressbuchfunktionalität (Address Book) 44 des Endgerätes A bestimmt werden (in Fig. 4 mit 402' ("2.1: A-party chooses B-party from Address Book") gekennzeichnet), wobei die Bestimmung insbesondere durch Spracheingaben und/oder durch Tastenbetätigungseingaben erfolgt. Die Sprachnachricht für den Teilnehmer B wird dann von dem Teilnehmer A aufgesprochen (in Fig. 4 mit 403 ("3: A-party speaks SMS message) gekennzeichnet) und schließlich die Spracheingabe durch den Teilnehmer A beendet (in Fig. 4 mit 403' ("3.1: A-party stops speaking") gekennzeichnet).

Die erfasste Sprachnachricht wird in eine Textnachricht, vorliegend eine SMS, konvertiert. Die SMS kann der Teilnehmer A anschließend mit einer seitens eines Endgerätes A ausgeführten Editoranwendung (Editor) 45 editieren. Dazu wird die aus der Sprachnachricht erzeugte SMS an die Editoranwendung (Editor) 45 übergeben. Bei einer seitens des Mobilfunknetzes C erfolgenden Konvertierung der Sprachnachricht in eine Textnachricht ist die Textnachricht über das Sprachdialogsystem IVR 43 des Mobilfunknetzes C mittels der Editoranwendung (Editor) 45 editierbar (in Fig. 4 mit 404 ("4: A-party edits converted text") gekennzeichnet). Bei einer seitens des Endgerätes A erfolgenden Konvertierung der Sprachnachricht in eine Textnachricht ist die Textnachricht über die Nachrichtenerzeugungseinrichtung (SMS Composer) 42 des Endgerätes A mittels der Editoranwendung editierbar (in Fig. 4 mit 404' ("4.1: A-party edits converted text") gekennzeichnet). Die Editoranwendung (Editor) 45 erlaubt vorliegend in beiden Fällen (404, 404') ein Editieren der SMS mittels Spracheingaben und/oder Tastatureingaben seitens des Endgerätes A.

Ist die aus der erfassten Sprachnachricht erzeugte Textnachricht (SMS) mit oder ohne ergänzender Editierung fertig gestellt, initiert der Teilnehmer A durch eine entsprechende Eingabe das Versenden der Textnachricht (SMS). Bei einer seitens des Mobilfunknetzes C erfolgenden Konvertierung der Sprachnachricht in eine Textnachricht erfolgt eine entsprechende Eingabe zur Initiierung der Versendung der Textnachricht (SMS) über das Sprachdialogsystem IVR 43, welches die Textnachricht (SMS) an das SMSC 46 übergibt (in Fig. 4 mit 405 ("5: A-party speaks the send command or pushes SMS send") gekennzeichnet).

Bei einer seitens des Endgerätes A erfolgenden Konvertierung der Sprachnachricht in eine Textnachricht erfolgt eine entsprechende Eingabe zur Initiierung der Versendung der Textnachricht (SMS) über die Nachrichtenerzeugungseinrichtung (SMS Composer) 42 des Endgerätes A, welches die Textnachricht (SMS) an das SMSC 46 zur Weiterleitung an den Teilnehmer B sendet (in Fig. 4 mit 405' ("5.1: A-party speaks the send command or pushes SMS send") gekennzeichnet).

Das SMSC 46 des Mobilfunknetzes C überträgt die Textnachricht (SMS) dann dem Teilnehmer B, in Fig. 4 mit 408 ("8: B-party receives voice message as SMS") gekennzeichnet. In dem mit 406 ("6: A-party optionally receives SMS delivery-report") gekennzeichneten optionalen Verfahrensschritt erhält der Teilnehmer A von dem SMSC 46 eine SMS über die Versendung der Nachricht (SMS) an den Teilnehmer B. Die von Teilnehmer A getätigte Kommunikation wird auf dem Konto (A-party account) 48 des Teilnehmers A seitens des Mobilfunknetzes C vergebührt. Die Vergebührung ist in Fig. 4 mit 407 ("7: A-party charged for SMS") gekennzeichnet.

Die in den Figuren der Zeichnung dargestellten und in Zusammenhang mit diesen beschriebenen Ausführungsbeispiele der Erfindung dienen lediglich der Erläuterung der Erfindung und sind für diese nicht beschränkend.

### Bezugszeichenliste

- A: Teilnehmer/Endgerät (Nachrichtenempfänger bzw. Nachrichtenempfänger)
- B: Teilnehmer/Endgerät (Nachrichtenempfänger bzw. Nachrichtenempfänger)
- C: Telekommunikationsnetz/Telekommunikationsnetzbetreiber
- STT: Anwendung Sprachumwandlung/Speech-to-Text
- 21: Browser/WAP Browser (Endgerät (B))
- 22: Voice-Mail-Einrichtung (Telekommunikationsnetz (C))
- 23: Telefon-Anwendung/Telephony Client (Endgerät (A))
- 24: Sprachdialogsystem/IVR (Telekommunikationsnetz (C))
- 25: Abrechnung/Konto (Teilnehmer (A))
- 26: SMSC
- 27: Nachrichten-Anwendung/SMS Client (Endgerät (B))
- 28: Telefon-Anwendung/Telephony Client (Endgerät (B))
- 29: Abrechnung/Konto (Teilnehmer (B))
- 201: Konfiguration Empfang Sprachnachricht (Voicemail) als SMS (Teilnehmer/Endgerät (B))
- 202: Anforderung von Teilnehmer/Endgerät A nach Sprachkommunikation mit Teilnehmer/Endgerät B
- 203: Hinterlassung Sprachnachricht (voice message) von Teilnehmer/Endgerät A für Teilnehmer/Endgerät B
- 204: Beendigung Sprachkommunikation (Teilnehmer/Endgerät (A))
- 205: Vergebührung Sprachkommunikation (Teilnehmer/Endgerät (A))
- 206: Empfang Sprachnachricht (voice message) (Teilnehmer/Endgerät (B))
- 207: Abhören Sprachnachricht (voice message)
- 208: Verwaltung Sprachnachricht (voice message)
- 209: Vergebührung Sprachkommunikation (Teilnehmer/Endgerät (B))
- 31: Telefon-Anwendung/Telephony Client (Endgerät (A))
- 32: Sprachdialogsystem/IVR (Telekommunikationsnetz (C))
- 33: Voice-Mail-Einrichtung (Telekommunikationsnetz (C))
- 34: Abrechnung/Konto (Teilnehmer (A))
- 35: SMSC
- 36: Nachrichten-Anwendung/SMS Client (Endgerät (B))
- 37: Telefon-Anwendung/Telephony Client (Endgerät (B))
- 38: Abrechnung/Konto (Teilnehmer (A))
- 301: Anforderung von Teilnehmer/Endgerät A nach Sprachkommunikation mit Teilnehmer/Endgerät B
- 302: Auswahl Hinterlassung Sprachnachricht (voice message) von Teilnehmer/Endgerät A für Teilnehmer/Endgerät B
- 303: Hinterlassung Sprachnachricht (voice message) von Teilnehmer/Endgerät A für Teilnehmer/Endgerät B
- 304: Beendigung Sprachkommunikation (Teilnehmer/Endgerät (A))
- 305: Vergebührung Sprachkommunikation (Teilnehmer/Endgerät (A))
- 306: Empfang Sprachnachricht (voice message) (Teilnehmer/Endgerät (B))
- 307: Abhören Sprachnachricht (voice message)
- 308: Vergebührung Sprachkommunikation (Teilnehmer/Endgerät (B))
- 41: Telefon-Anwendung/Telephony Client (Endgerät (A))
- 42: Nachrichtenerzeugungseinrichtung/SMS Composer (Endgerät (A))
- 43: Sprachdialogsystem/IVR (Telekommunikationsnetz (C))
- 44: Adressbuchfunktionalität/Address Book (Endgerät (A))
- 45: Editor-Anwendung/Editor (Endgerät (A))
- 46: SMSC
- 47: Nachrichten-Anwendung/SMS Client (Endgerät (B))
- 48: Abrechnung/Konto (Teilnehmer (A))
- 401: Anforderung von Teilnehmer/Endgerät A nach Versendung einer Sprachnachricht mittels SMS
- 402: Erfassung Rufnummer Kommunikationspartner für Sprachnachricht durch Eingabe
- 402': Erfassung Rufnummer Kommunikationspartner für Sprachnachricht unter Nutzung von Adressbuchfunktionalität
- 403: Erfassung/Eingabe SMS als Sprachnachricht
- 403': Beendigung Spracheingabe
- 404: Editierung konvertierte Sprachnachricht mittels Editor-Anwendung (Editor (45))
- 404': Editierung konvertierte Sprachnachricht mittels Editor-Anwendung (Editor (45))
- 405: Initiierung Versendung Textnachricht, (SMS)
- 405': Initiierung Versendung Textnachricht (SMS)
- 406: Empfang SMS über Versendung Textnachricht (SMS) (Teilnehmer/Endgerät (A))
- 407: Vergebührung Sprachkommunikation (Teilnehmer/Endgerät (A))
- 408: Empfang Textnachricht (SMS) (Teilnehmer/Endgerät (B))

## Patentansprüche

1. Verfahren zur Übertragung von Nachrichten in Telekommunikationsnetzen, insbesondere Mobilfunknetzen gemäß einem GSM-, GPRS- und/oder UMTS-Funknetzstandard, wobei
ein Nachrichtensender (23, 31, 41) eine Sprachnachricht erzeugt (203, 302, 403),
aus der Sprachnachricht eine Textnachricht erzeugt wird und
die Textnachricht mittels eines Nachrichtendienstes des Telekommunikationsnetzes an wenigstens einen Nachrichtenempfänger (27, 36, 47) gesendet wird (206, 306, 408),
**dadurch gekennzeichnet, dass**
in Abhängigkeit einer vom Nachrichtenempfänger vorgenommenen Konfiguration einer konfigurierbaren Sprachnachrichten-Einrichtung des Telekommunikationsnetzes seitens des Telekommunikationsnetzes aus der Sprachnachricht eine Textnachricht erzeugt wird, wenn
der Nachrichtenempfänger (27, 36, 47) im Telekommunikationsnetz nicht erreichbar ist,
und/oder
das in dem Telekommunikationsnetz betreibbare Endgerät des Nachrichtenempfängers (27, 36, 47) sich in einem Funktionszustand befindet, in welchem eine akustische Wiedergabe von Signalen, vorzugsweise Sprachnachrichten, deaktiviert ist.

2. Verfahren nach Anspruch 1, **dadurch gekennzeichnet, dass** die aus der Sprachnachricht erzeugte Textnachricht vor der Sendung an den wenigstens einen Nachrichtenempfänger (27, 36, 47) von dem Nachrichtensender (23, 31, 41) überprüft und bedarfsweise editiert wird.

3. Verfahren nach Anspruch 2, **dadurch gekennzeichnet, dass** die Überprüfung und/oder das Editieren der aus der Sprachnachricht erzeugten Textnachricht unter Nutzung einer seitens eines in dem Telekommunikationsnetz betreibbaren Endgerätes des Nachrichtensenders (23, 31, 41) ausgeführten Editoranwendung und/oder unter Nutzung eines Sprachdialogsystems, Interactive Voice Response-IVR erfolgt.

4. Verfahren nach Anspruch 2 oder Anspruch 3, **dadurch gekennzeichnet, dass** die Überprüfung und/oder das Editieren der aus der Sprachnachricht erzeugten Textnachricht durch akustische und/oder optische Eingaben beziehungsweise Ausgaben seitens wenigstens einer Eingabeeinrichtung beziehungsweise Ausgabeeinrichtung eines in dem Telekommunikationsnetz betreibbaren Endgerätes des Nachrichtensenders (23, 31, 41) erfolgt, wobei eine Eingabe vorzugsweise durch Spracheingabe und/oder durch Tastenbetätigung seitens eines in dem Telekommunikationsnetz betreibbaren Endgerätes des Nachrichtensenders (23, 31, 41) erfolgt.

5. Verfahren nach einem der Ansprüche 1 bis 4, **dadurch gekennzeichnet, dass** die Textnachricht seitens einer Einrichtung des Telekommunikationsnetzes und/oder seitens einer mit dem Telekommunikationsnetz verbindbaren Einrichtung aus der Sprachnachricht erzeugt wird.

6. Verfahren nach Anspruch 5, **dadurch gekennzeichnet, dass** die erzeugte Textnachricht zur Überprüfung und/oder zum Editieren an den Nachrichtensender (23, 31, 41) gesendet wird, vorzugsweise mittels eines Nachrichtendienstes des Telekommunikationsnetzes.

7. Verfahren nach Anspruch 5 oder Anspruch 6, **dadurch gekennzeichnet, dass** die Überprüfung und/oder das Editieren der aus der Sprachnachricht erzeugten Textnachricht über das Telekommunikationsnetz erfolgt, wobei der Nachrichtensender (23, 31, 41) über das Telekommunikationsnetz mit der die Textnachricht aus der Sprachnachricht erzeugenden Einrichtung verbunden wird und die Textnachricht von dem Nachrichtensender (23, 31, 41) über das Telekommunikationsnetz überprüft und bedarfsweise editiert wird.

8. Verfahren nach Anspruch 7, **dadurch gekennzeichnet, dass** zur Überprüfung und/oder zum Editieren der aus der Sprachnachricht erzeugten Textnachricht seitens des Telekommunikationsnetzes oder seitens des Endgerätes des Nachrichtensenders (23, 31, 41) eine Sprachnachricht erzeugt wird, welche seitens des Endgerätes des Nachrichtensenders (23, 31, 41) wiedergegeben wird.

9. Verfahren nach einem der Ansprüche 1 bis 8, **gekennzeichnet durch** einen Kurzmitteilungsdienst oder einen Multimediamitteilungsdienst als Nachrichtendienst des Telekommunikationsnetzes.

10. Verfahren nach Anspruch 9, **dadurch gekennzeichnet, dass** die Textnachricht eine Nachricht in einem Format des Kurzmitteilungsdienstes oder des Multimediamitteilungsdienstes ist.

11. Verfahren nach Anspruch 9 oder Anspruch 10, **dadurch gekennzeichnet, dass** die Sprachnachricht eine Nachricht in einem Format des Multimediamitteilungsdienstes ist.

## Claims

1. A method for the transmission of messages in telecommunication networks, in particular mobile radio networks according to a GSM, GPRS and/or UMTS radio network standard, wherein
a message sender (23, 31, 41) generates a voice message (203, 302, 403),
a text message is generated from the voice message and
the text message is sent (206, 306, 406) to at least one message receiver (27, 36, 47) by means of a message service of the telecommunication network,
**characterized in that**
in dependence on a configuration of a configurable voice message device of the telecommunication network, which configuration is made by the message receiver, a text message is generated from the voice message by means of the telecommunication network, if
the message receiver (27, 36, 47) is not reachable in the telecommunication network,
and/or
the terminal of the message receiver (27, 36, 48), which terminal is operable in the telecommunication network, is in a functional state, in which an acoustic reproduction of signals, preferably voice messages, has been deactivated.

2. A method according to claim 1, **characterized in that** the text message generated from the voice message will be checked and, if required, edited by the message sender (23, 31, 41) before it will be sent to the at least one message receiver (27, 36, 47).

3. A method according to claim 2, **characterized in that** the checking and/or editing of the text message generated from the voice message will be executed by using an editor application and/or by using a speech dialog system, interactive voice response-IVR, which is carried out by a terminal of the message sender (23, 31, 41), which terminal can be operated in the telecommunication network.

4. A method according to claim 2 or claim 3, **characterized in that** the checking and/or editing of the text message generated from the voice message will be executed on the base of acoustic and/or optical inputs or outputs from at least one input device or output device of a terminal of the message sender (23, 31, 41), which terminal can be operated in the telecommunication network, wherein an input is preferably made by voice input and/or by key activation by means of a terminal of the message sender (23, 31, 41), which terminal can be operated in the telecommunication network.

5. A method according to one of the claims 1 to 4, **characterized in that** the text message will be generated from the voice message by means of a device of the telecommunication network and/or by means of a device which can be connected to the telecommunication network.

6. A method according to claim 5, **characterized in that** the generated text message will be sent to the message sender (23, 31, 41) for being checked and/or edited, preferably by means of a message service of the telecommunication network.

7. A method according to claim 5 or claim 6, **characterized in that** the text message generated from the voice message will be checked and/or edited via the telecommunication network, wherein the message sender (23, 31, 41) will be connected via the telecommunication network to the device which generates the text message from the voice message and the text message will be checked and, if required, edited by the message sender (23, 31, 41) via the telecommunication network.

8. A method according to claim 7, **characterized in that** for checking and/or editing the text message generated from the voice message, a voice message will be generated by the telecommunication network or by the terminal of the message sender (23, 31, 41), which voice message will be reproduced by the terminal of the message sender (23, 31, 41).

9. A method according to one of the claims 1 to 8, **characterized by** a short message service or a multimedia message service as message service of the telecommunication network.

10. A method according to claim 9, **characterized in that** the text message is a message in a format of the short message service or the multimedia message service.

11. A method according to claim 9 or claim 10, **characterized in that** the voice message is a message in a format of the multimedia message service.

## Revendications

1. Procédé de transmission de messages dans des réseaux de télécommunication, notamment des réseaux radio mobile selon un standard de réseau radio GSM, GPRS et/ou UMTS, dans lequel
un émetteur de messages (23, 31, 41) génère un message vocal (203, 302, 403),
un message texte est généré à partir du message vocal et
le message texte est envoyé (206, 306, 406) à au moins un récepteur de messages (27, 36, 47) par moyen d'un service de messages du réseau de télécommunication,
**caractérisé en ce qu'**
en fonction d'une configuration d'un dispositif de messages vocaux configurable du réseau de télécommunication, le réseau de télécommunication, quel configuration effectuée par le récepteur de messages, génère un message texte à partir du message vocal, si
le récepteur de messages (27, 36, 47) n'est pas joignable dans le réseau de télécommunication
et/ou
le terminal du récepteur de messages (27, 36, 47), lequel terminal peut être actionné dans le réseau de télécommunication, est dans un état fonctionnel, dans lequel une reproduction acoustique de signaux, de préférence de messages vocaux, est désactivée.

2. Procédé selon la revendication 1, **caractérisé en ce que** le message texte généré à partir du message vocal est vérifié et, en cas de besoin, édité par l'émetteur de messages (23, 31, 41) avant qu'il soit envoyé à l'au moins un récepteur de messages (27, 36, 47).

3. Procédé selon la revendication 2, **caractérisé en ce que** la vérification et/ou l'édition du message texte généré à partir du message vocal se fait en utilisant une application d'édition et/ou en utilisant un système de dialogue vocal, un serveur vocal interactif-IVR, laquelle application est exécutée par un terminal de l'émetteur de messages (23, 31, 41), lequel terminal peut être actionné dans le réseau de télécommunication.

4. Procédé selon la revendication 2 ou la revendication 3, **caractérisé en ce que** la vérification et/ou l'édition du message texte généré à partir du message vocal se fait par moyen d'entrées ou de sorties acoustiques et/ou optiques d'au moins un dispositif d'entrée ou d'au moins un dispositif de sortie d'un terminal de l'émetteur de message (23, 31, 41), lequel terminal peut être actionné dans le réseau de télécommunication, une entrée étant de préférence effectuée par une entrée vocale et/ou par actionnement de touches par moyen d'un terminal de l'émetteur de message (23, 31, 41), lequel terminal peut être actionné dans le réseau de télécommunication.

5. Procédé selon l'une des revendications 1 à 4, **caractérisé en ce que** le message texte est généré à partir du message vocal par moyen d'un dispositif du réseau de télécommunication et/ou par moyen d'un dispositif susceptible d'être relié au réseau de télécommunication.

6. Procédé selon la revendication 5, **caractérisé en ce que** le message texte généré est envoyé à l'émetteur de messages (23, 31, 41) pour la vérification et/ou pour l'édition, de préférence par moyen d'un service de messages du réseau de télécommunication.

7. Procédé selon la revendication 5 ou la revendication 6, **caractérisé en ce que** la vérification et/ou l'édition du message texte généré à partir du message vocal se fait via le réseau de télécommunication, l'émetteur de messages (23, 31, 41) étant relié via le réseau de télécommunication au dispositif, qui génère le message texte à partir du message vocal, et le message texte étant vérifié et, en cas de besoin, édité par l'émetteur de messages (23, 31, 41) via le réseau de télécommunication.

8. Procédé selon la revendication 7, **caractérisé en ce qu'**un message vocal, qui est reproduit par le terminal de l'émetteur de messages (23, 31, 41), est généré par le réseau de télécommunication ou par le terminal de l'émetteur de messages (23, 31, 41) pour vérifier et/ou éditer le message texte généré à partir du message vocal.

9. Procédé selon l'une des revendications 1 à 8, **caractérisé par** un service de messages courts ou par un service de messages multimédia en tant que service de, messages du réseau de télécommunication.

10. Procédé selon la revendication 9, **caractérisé en ce que** le message texte est un message dans un format du service de messages courts ou du service de messages multimédia.

11. Procédé selon la revendication 9 ou la revendication 10, **caractérisé en ce que** le message vocal est un message dans un format du service de messages multimédia.
